# EUROPÄISCHE PATENTANMELDUNG

(11) **EP 1 278 021 A2**
(43) Veröffentlichungstag der Anmeldung: **22.01.2003**
(21) Anmeldenummer: 02014599.1
(22) Anmeldetag: 02.07.2002
(51) Int. Cl.: F24F 3/14, B60H 3/00

(54) **Vorrichtung und Verfahren zum selektiven Entfernen gasförmiger Schadstoffe aus der Raumluft**

(30) Priorität: 12.07.2001 DE 10133831
(71) Anmelder: EADS Deutschland GmbH, 85521 Ottobrunn (DE)
(72) Erfinder: Göbel, Johann, 81547 München (DE); Oberpriller, Helmut, 83620 Kleinhöhenrain (DE); Peuser, Peter, 85521 Riemerling (DE)

(57) **Zusammenfassung**

Die vorliegende Erfindung betrifft ein Verfahren zum selektiven Entfernen von gasförmigen Schadstoffen aus der Raumluft, sowie eine Vorrichtung zum Durchführen des Verfahrens. Aufgabe ist es hierbei, unerwünschte Immissionen aus der Raumluft selektiv und vollständig mit relativ geringem apparativem und energetischem Aufwand zu entfernen.

Die Aufgabe wird erfindungsgemäß dadurch gelöst, dass die in der zu reinigenden Luft enthaltenen Schadstoffe durch Einwirkung optischer Strahlung aufgrund resonanter und / oder nichtresonanter Einfach- und/oder Mehrfachphotonenanregung ionisiert werden, so dass die ionisierten Schadstoffe durch ein elektrisches Feld abgesaugt und aus der zu reinigenden Luft entfernt werden. Ein geringer Teil der für die Ionisierung erforderlichen Energie kann dabei auch in Form von Mikrowellenenergie oder Feldelektrischer Energie aufgebracht werden.

Die Erfindung findet hauptsächlich in Klimaanlagen und anderen Luftzirkulationssystemen Anwendung.

## Beschreibung

Die Erfindung bezieht sich auf eine Vorrichtung und auf ein Verfahren zum selektiven Entfernen gasförmiger Schadstoffe aus der Raumluft, insbesondere in Fahrzeugkabinen, Flugzeugkabinen oder dergleichen.

Luftschadstoffe in Innenräumen, in denen sich Menschen aufhalten, wie beispielsweise in Flugzeugen, Pkws, Büros usw. stellen ein erhebliches Problem für das gesundheitliche Wohlbefinden dar. Sie werden aus Einrichtungsgegenständen, Oberflächenbeschichtungen usw., sowie bei Tätigkeiten wie z. B. Kochen und Braten, aber auch durch die im Raum befindlichen Personen emittiert. Zusätzlich können luftfremde Stoffe auch von außen (z. B. Immissionen aus Verkehr und/oder Industrie) in Innenräume gelangen. Um nachteilige Einflüsse auf den menschlichen Organismus zu vermeiden, sind umfangreiche Filterungsmaßnahmen zur Aufbereitung bzw. Reinigung der Raumluft erforderlich.

Es sind Vorrichtungen zur Reinigung von Luft bekannt, die auf nicht-regenerativen Adsorptionsverfahren basieren. Hierbei werden im wesentlichen Filter mit Aktivkohle, modifizierter Aktivkohle oder Zeolithe verwendet. In DE 198 23 611 A1 und DE 197 30 291 A1 sind z. B. Vorrichtungen zum Entfernen von Schad- bzw. Geruchsstoffen und toxischen Gasen aus Luftströmen beschrieben, wobei in der zuletzt genannten Patentanmeldung zwei Adsorber vorgesehen sind, die wechselweise auf Adsorptionsbetrieb und Desorptionsbetrieb schaltbar sind (regeneratives Verfahren). Speziell im niedrigen Konzentrationsbereich, d.h. im Immissionsbereich mit Konzentrationen, die typischerweise im ppb-Bereich liegen (im Folgenden auch als "indoor air" bezeichnet), ist jedoch die Effizienz herkömmlicher Adsorbentien beschränkt, da die Beladung linear mit der Schadstoffkonzentration (Henry'sches Gesetz) abnimmt. Um eine gute Filterwirksamkeit zu erhalten müssen die Adsorberfilter nach einer gewissen Zeit ausgewechselt bzw. regeneriert werden. Zudem ist die Wirksamkeit und Effizienz der Luftreinigung stark von Umwelteinflüssen, insbesondere von Temperatur und Feuchte, abhängig. Auch ist bekannt, dass mikrobieller Bewuchs bzw. eine Akkumulation von Pilzen, Bakterien und Pollen die Filter zu einem nicht zu vernachlässigenden Gesundheitsrisiko werden lassen. Ferner sind Vorrichtungen mit derartigen Filtersystemen in der Regel mit einem großen Bauvolumen verbunden, das insbesondere bei Fahr- und Flugzeugen nicht zur Verfügung steht.

Des weiteren sind Vorrichtungen und Verfahren zum Reinigen von Luft bekannt, die eine Ionisation des gesamten Luftvolumens durchführen. Die Ionisation kann dabei, wie in DE 19736293 A1 beschrieben, durch Korona-Entladung erfolgen. Es sind aber auch andere Luftionisierer bekannt, die Ionisationskammern und elektrostatische Filteranlagen umfassen (vgl. DE 298 08 126 U1). Aufgrund des Erfordernisses, die gesamte Luft zu ionisieren, sind hohe Leistungen erforderlich, da die hierzu verwendeten Ionisationsstrecken mit entsprechender Hochspannung versorgt werden müssen. Gleichzeitig ist der Wirkungsgrad in der Regel enttäuschend. Andererseits sind viele derartige Systeme nicht effektiv genug, um die immer strenger werdenden gesetzlichen Auflagen zu erfüllen. Ein weiterer Nachteil, der auf die Ionisierung der Sauerstoffinoleküle und Stickstoffmoleküle zurückzuführen ist, ist die Bildung von reaktivem Ozon bzw. Stickoxiden.

Ähnlich ist es bei plasmaoxidativen und photochemischen Luftreinigungsverfahren, die auf einen vollständigen Abbau der Schadstoffe abzielen. Die Entstehung unerwünschter Nebenprodukte ist auch hier nicht auszuschließen, da nicht nur gewünschte Bestandteile, sondern im Prinzip alle Bestandteile bzw. Komponenten der Luft ionisiert werden. Dabei kann wiederum Ozon entstehen, das unter Radikalbildung weiter reagiert, so dass unerwünschte Stoffe entstehen. Um einen möglichst vollständigen Abbau zu induzieren sind sowohl hohe Elektronenenergien/ Photonenenergien als auch Radikalkonzentrationen notwendig, was wiederum hohe elektrische Leistungen erfordert. Außerdem ist der Energieaufwand uneffektiv, da auch nicht störende Bestandteile der Raumluft ionisiert werden. Ferner haben auch diese Vorrichtungen den Nachteil, dass sie viel Raum beanspruchen, ein beträchtliches Gewicht haben und in der Wartung sehr aufwendig sind.

Ferner sind Vorrichtungen bekannt, die zum Entfernen von Staubpartikeln und anderen makroskopischen Teilchen aus einem Gasstrom dienen. Eine derartige Anordnung ist beispielsweise in US 4,543,484 beschrieben, die unter Verwendung eines hochenergetischen Laserstrahls die zu entfernenden Teilchen entweder zerstäubt oder elektrisch auflädt. Die geladenen Teilchen werden dann unter Einwirkung eines elektrischen Feldes entfernt. Nachteilig sind auch in diesem Fall die erforderlichen hohen elektrischen Leistungen und die großen Abmessungen.

Ausgehend vom Stand der Technik ist es somit die Aufgabe der vorliegenden Erfindung, ein Verfahren zum Entfernen von gasförmigen Schadstoffen aus der Raumluft, sowie eine Vorrichtung zur Durchführung des Verfahrens zu schaffen, wodurch es möglich ist, unerwünschte Immissionen in der Raumluft selektiv und vollständig mit relativ geringem apparativem und energetischem Aufwand zu entfernen.

Die Aufgabe wird durch das Verfahren gemäß Patentanspruch 1 sowie durch die Vorrichtung gemäß Patentanspruch 9 gelöst. Weitere vorteilhafte Merkmale, Aspekte und Details der Erfindung ergeben sich aus den Unteransprüchen, der Beschreibung sowie aus den Zeichnungen.

Das erfindungsgemäße Verfahren zum Entfernen von gasförmigen Schadstoffen aus der Raumluft, das beispielsweise in Flugzeugkabinen und Kraftfahrzeug-Personenkabinen Anwendung finden kann, zeichnet sich dadurch aus, dass die zu reinigende Luft zunächst in einen Reinigungsraum geleitet wird und dann mit optischer Strahlung bestrahlt wird, so dass die in der zu reinigenden Luft enthaltenen Schadstoffe durch Einfach- und/oder Mehrfachphotonenanregung ionisiert werden. Die ionisierten Schadstoffe werden anschließend durch Anlegen eines elektrischen Feldes abgesaugt und dadurch aus der zu reinigenden Luft entfernt. Zweckmäßigerweise erfolgt die Einfach- und/oder mehrfach photonenanregung resonant und/oder nicht resonant.

Das Verfahren zeichnet sich somit vorteilhafterweise dadurch aus, dass lediglich die in der zu reinigenden Luft enthaltenen Schadstoffe ionisiert werden und nicht etwa Bestandteile der Luft, wie Sauerstoff, Stickstoff, Kohlendioxid, Argon etc.. D.h., es werden ausschließlich die in der zu reinigenden Luft enthaltenen Schadstoffmoleküle selektiv durch Photoionisation ionisiert und mittels eines elektrischen Feldes aus dem Luftstrom entfernt. Die Energie der eingestrahlten Photonen (bzw. Lichtquanten) reicht dabei nicht aus, um Luftbestandteile zu ionisieren, so dass eine Trennung aufgrund des elektrischen Feldes von ionisierten Schadstoffmolekülen und nicht ionisierten Luftmolekülen auf einfache Weise möglich ist. Diese Art der Ionisation beinhaltet auch, dass keine unerwünschten bzw. schädlichen Nebenprodukte erzeugt werden, wie es bei anderen Ionisations- oder Oxidationsverfahren der Fall ist.

Vorteilhafterweise wird die selektive Photoionisation dadurch erzielt, dass die Energie der optischen Strahlung, die auf die zu reinigende Luft einwirkt, kleiner ist, als die Energiedifferenz zwischen Grundzustand und Ionisationsgrenze der Luftmoleküle, wobei die Energie aber ausreichend groß ist, um die sich in der zu reinigenden Luft befindenden Schadstoffmoleküle zu ionisieren.

Da die Ionisierungsenergie der Luft-Hauptbestandteile Sauerstoff, Stickstoff, Kohlendioxid, Argon etc. über typischerweise 12,5 eV liegt, wobei dieser Wert der Ionierungsenergie von Sauerstoff entspricht, wird vorzugsweise eine Energie kleiner als 12,5 eV verwendet. Die Wellenlänge der verwendeten optischen Strahlung liegt typischerweise im UV, wobei es vorteilhaft ist, Mehrphotonenprozesse einzusetzen.

Dabei können Photonen gleicher Energie bzw. Wellenlänge oder auch Photonen unterschiedlicher Wellenlängen verwendet werden. Es ist vorteilhaft, wenn beim Mehrphotonenprozeß eines oder auch mehrere Zwischen-Niveaus durch eine geeignete Wahl der Anregungswellenlängen resonant angeregt werden, da dann die Anregungswirkungsquerschnitte besonders groß sind. Dabei gilt es, die Wellenlängen so zu wählen, dass die Energie der eingestrahlten Photonen der Energie des ersten Zwischenniveaus oder die Summe aus den Energien der eingestrahlten Photonen der Energie wenigstens eines Zwischenniveaus oder auch den Energien mehrerer Zwischenniveaus entspricht. Je näher die Photonenenergien bei den Energieniveaus liegen, um so größer ist auch die Anregungswahrscheinlichkeit.

Mittels einer zeitlichen Änderung der Wellenlänge der Strahlung ist es auch möglich, nacheinander verschiedene Schadstoffmoleküle zu ionisieren, da unterschiedliche Schadstoffmoleküle im allgemeinen unterschiedliche Ionisierungsenergien aufweisen. Die Wellenlänge der optischen Strahlung wird dabei vorzugsweise zeitlich zwischen 200 nm und 330 nm variiert. Die bedeutet, dass die Ionisierung verschiedener Schadstoffinoleküle auch dadurch realisiert werden kann, dass die Bandbreite der verwendeten optischen Strahlung in geeigneter Weise ausgewählt wird.

Gemäß einer alternativen Ausführungsform können zwei oder mehrere Bestrahlungsquellen verwendet werden, die optische Strahlung unterschiedlicher Wellenlänge emittieren. Dadurch, dass Strahlung unterschiedlicher Wellenlänge gleichzeitig oder alternierend auf die zu reinigende Luft einwirkt, kann die Ionisation verschiedener Schadstoffinoleküle erfolgen.

Bei einer mehr als zweistufigen Photonenanregung ist es ferner zweckmäßig, dass die optische Strahlung auch Wellenlängen im sichtbaren oder im infraroten Bereich enthält, wobei die Wellenlängen zwischen 340 nm und 1 mm liegen. Die dazwischen liegenden Werte sind jeweils auswertbar.

Daneben ist es bei einer derartigen mehr als zweistufigen Photonenanregung zweckmäßig außer bzw. neben optischer Strahlung auch Mikrowellenstrahlung und/oder elektrische Feldenergie zuzuführen.

Ferner ist es vorteilhaft, dass die optische Strahlung in gepulster Form auf die zu reinigende Luft einwirkt, wobei die Repititionsrate zwischen 1 Hz und 200 GHz und die Pulsdauer typischerweise zwischen einer ms und 10 fs liegt, z.B. im pico- oder nanosekunden -Bereich.

Die gepulste Bestrahlung der zu reinigenden Luft hat insbesondere den Vorteil, dass höhere Intensitäten der optischen Strahlung, eingesetzt werden können, so dass eine effektive Ionisation über Einfach- und Mehrfach-Prozesse und somit eine effektive Entfernung von gasförmigen Schadstoffen aus der Luft möglich ist.

Die erfindungsgemäße Vorrichtung zum Entfernen von gasförmigen Schadstoffen aus der Luft, beispielsweise in Flugzeugkabinen und Fahrzeug-Personenkabinen, umfasst einen Reinigungsraum, in dem sich die zu reinigende Luft befindet, mindestens eine Strahlungsquelle, die optische Strahlung emittiert und auf die zu reinigende Luft einstrahlt, so dass die in der zu reinigenden Luft enthaltenen Schadstoffe durch Einfach- und/oder Mehrfachphotonenanregung ionisiert werden. Weiterhin ist eine Elektrodenanordnung zum Erzeugen eines elektrischen Feldes integriert, wodurch die ionisierten Schadstoffe abgesaugt und aus der zu reinigenden Luft entfernt werden. Zweckmäßigerweise erfolg dabei die Einfach- und/oder Mehrfachphotonenanregung resonant und/oder nicht resonant. Der Vorteil dieser Vorrichtung liegt vor allem darin, dass mit geringem apparativem Aufwand eine effektive Reinigung der Luft, unabhängig von Temperatur und Feuchte, durchführbar ist. Ferner weist die erfindungsgemäße Vorrichtung geringe Abmessungen auf, so dass sie leicht in bekannte Systeme, wie z.B. Klimaanlagen, eingebaut werden kann, ohne dass umfangreiche Modifikationen erforderlich sind.

Gemäß einer Ausführungsform weist die Vorrichtung einen Reinigungsraum auf, der eine Einlassöffnung zum Einströmen der zu reinigenden Luft und zwei Auslassöffnungen aufweist, wobei die erste Auslassöffnung zum Abführen der ionisierten Schadstoffe und die zweite Auslassöffnung zum Weiterleiten der gereinigten Luft dient.

Ferner weist der Reinigungsraum vorzugsweise ein Fenster auf, durch das die von der Strahlungsquelle emittierte optische Strahlung auf die zu reinigende Luft eingestrahlt wird. Somit wird die zu reinigende Luft in einen abgeschlossenen Raum geleitet, der sich einfach in bestehende Anordnungen integrieren lässt. Ferner ist dadurch eine Trennung von Strahlungsquelle und zu reinigender Luft gewährleistet, so dass beispielsweise die Strahlungsquelle jederzeit leicht auswechselbar ist.

Zudem ist es vorteilhaft, eine durchstimmbare Strahlungsquelle zu verwenden, so dass die optische Strahlung zeitlich über einen vorgegebenen Wellenlängenbereich variiert. Dadurch ist es möglich, nacheinander verschiedene Schadstoffe zu ionisieren. Weiterhin ermöglicht die Verwendung einer durchstimmbaren Strahlungsquelle die Einstellung einer günstigen Wellenlänge, bei der gleichzeitig mehrere Schadstoffinoleküle ionisiert werden.

Vorzugsweise wird eine gepulste Strahlungsquelle verwendet, da auf diese Weise höhere Energiebeiträge für eine Einfach- und/oder Mehrfachphotoionisierung der Schadstoffe zur Verfügung stehen.

Gemäß einer alternativen Ausführungsform werden zwei oder mehrere Strahlungsquellen verwendet, die optische Strahlung unterschiedlicher Wellenlängen emittieren, so dass gleichzeitig verschiedene Schadstoffe ionisiert werden. Dabei ist es zweckmäßig, einen UV-Laser, eine UV-Lichtquelle oder dergleichen als Strahlungsquelle zu verwenden. Daneben kann alternativ oder zusätzlich - vorzugsweise bei einer mehr als zweistufigen Photoanregung - Miktowellenstrahlung und/oder elektrische Feldenergie verwendet werden.

Vorteilhafterweise findet die erfindungsgemäße Vorrichtung Anwendung in Klimaanlagen oder anderen Luftzirkulationssystemen.

Nachfolgend wird die Erfindung anhand der beigefügten Abbildungen in näheren Einzelheiten erläutert, in denen zeigt:
- Fig. 1: eine schematische Anordnung eines Luftzirkulationskreislaufes, der die erfindungsgemäße Vorrichtung enthält;
- Fig. 2: eine schematische Darstellung der Anordnung zum Entfernen von gasförmigen Schadstoffen aus der Raumluft; und
- Fig. 3: ein Termschema, dass das Prinzip der Photoionisation erläutert.

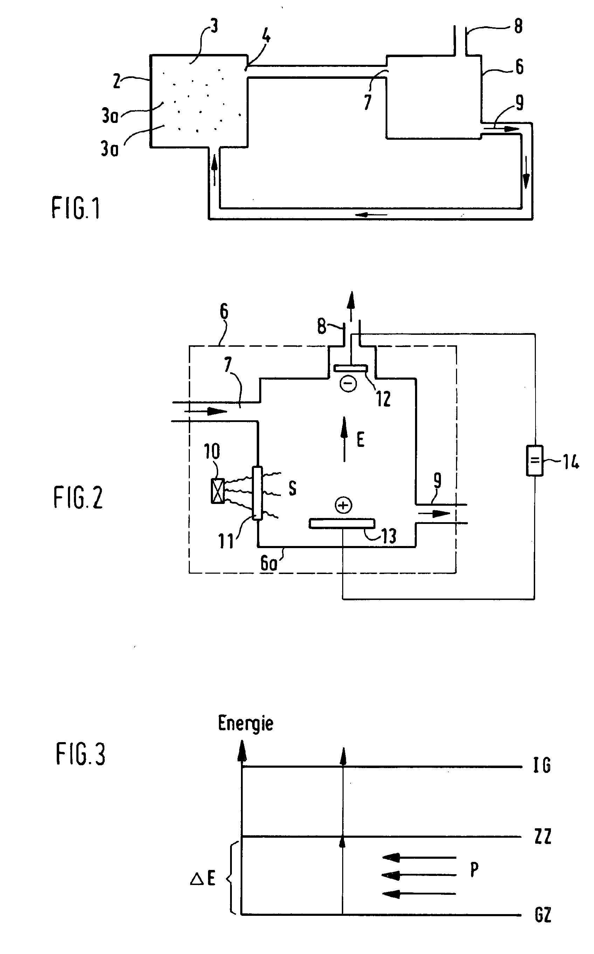

Fig. 1 zeigt in schematischer Darstellung einen "geschlossenen" Luftzirkulationskreislauf 1, in dem eine erfindungsgemäße Vorrichtung angeordnet ist. Mit Bezugsziffer 2 ist ein abgeschlossener Raum bezeichnet, in dem sich Luft 3 befindet. Dieser abgeschlossene Raum kann eine Fahrgastzelle eines Pkws, eine Flugzeugkabine oder ein beliebiger anderer Raum sein. Da eine Frischluftzufuhr in vielen Anwendungsbereichen begrenzt ist, wird die Luft 3 in der Regel recht schnell verbraucht. Es sammeln sich vermehrt Schadstoffe an, die negative Auswirkungen auf das Wohlbefinden und auf den menschlichen Organismus haben. Die in Fig. 1 mit Bezugsziffer 3a bezeichneten Schadstoffe sind typischerweise VOC's (Volatile Organic Compounds), wie beispielsweise Benzinkohlenwasserstoffe, Lösungsmittel, Geruchsstoffe, usw. Die Konzentration der Schadstoffe liegt bei dem hier betrachteten Anwendungsgebiet im Bereich von einigen ppb's (µg m⁻³) bis in den unteren ppm-Bereich (mg/m⁻³); d. h. im Immissionskonzentrationsbereich. Somit adressiert die folgende Erläuterung vorrangig den Bereich "indoor air". Dies bedeutet jedoch nicht, dass die vorliegende Erfindung auf einen derartigen Anwendungsbereich beschränkt ist.

Um für die Passagiere bzw. Personen, die sich in dem Raum 2 aufhalten, ein möglichst angenehmes und gesundes Raumklima zu schaffen, und um deren Wohlbefinden zu fördern, ist eine Reinigung der Luft von Schadstoffen 3a erforderlich. Zu diesem Zweck wird über die Auslassöffnung 4 des Raumes 2 die zu reinigende Luft abgeführt und an eine Reinigungseinheit 6 weitergeleitet. Dies erfolgt beispielsweise in dem in Fig. 1 gezeigten Kreislauf 1 mit Hilfe eines nicht dargestellten Ventilators oder anderen geeigneten Mitteln zum Umwälzen bzw. Zirkulieren von Luft. Gegebenenfalls kann dem Kreislauf 1 an einer geeigneten Stelle Frischluft zugeführt werden. Dies ist aber in Fig. 1 nicht dargestellt.

Die Bestandteile der Reinigungseinheit 6 sind in Fig. 2 im einzelnen schematisch dargestellt. Die Reinigungseinheit 6 ist in Fig. 2 gestrichelt gezeichnet und umfasst ihrerseits einen Reinigungsraum 6a, eine Strahlungsquelle 10 und ein Elektrodenpaar 12 und 13, das mit einer Spannungsversorgung 14 verbunden ist. Die zu reinigende Luft 3 wird über einen Einlass 7 in den Reinigungsraum 6a geleitet. Anschließend wird die von der Strahlungsquelle 10 emittierte optische Strahlung S auf die zu reinigende Luft eingestrahlt. Die Strahlungsquelle 10 befindet sich außerhalb des Reinigungsraumes 6a, so dass die optische Strahlung S durch ein in der Außenwand des Reinigungsraumes 6a angebrachtes Fenster 11 auf die zu reinigende Luft eingestrahlt wird. Die Energie der von der Strahlungsquelle 10 emittierten optischen Strahlung S wird dabei derart ausgewählt, dass sie lediglich ausreicht, um die in der zu reinigenden Luft enthaltenen Schadstoffmoleküle zu ionisieren, nicht aber die Luftbestandteile. Die Bestandteile der Luft sind im wesentlichen Sauerstoff, Stickstoff, Argon und Kohlendioxid und werden im Folgenden der Einfachheit halber als "Luftbestandteile" bezeichnet. Hierbei wird die Tatsache ausgenutzt, dass die Ionisierungsenergie der aus der zu reinigenden Luft zu entfernenden Schadstoffmoleküle unterhalb der der Luftbestandteile bzw. -moleküle liegt. Da die Ionisierungsenergien von Sauerstoff, Kohlendioxid, Stickstoff und Argon bekannterweise bei 12.5 eV, 14.4 eV, 15.5 eV bzw. 15.7 eV liegen, bedeutet dies, dass bei Bestrahlung der zu reinigenden Luft mit Quantenenergien kleiner 12.5 eV (z.B. 12 eV, 11.5 eV, 11 eV etc.) gewährleistet ist, dass lediglich die Schadstoffmoleküle ionisiert werden und nicht die Moleküle der Luftbestandteile. Die ionisierten Schadstoffinoleküle werden dann aufgrund eines elektrischen Feldes E, dass zwischen den Elektroden 12 und 13 innerhalb des Reinigungsraumes 6a anliegt, abgesaugt und über die Auslassöffnung 8 abgeführt.

Die so gereinigte Luft wird über die zweite Auslassöffnung 9 weitergeleitet, beispielsweise zurück in den abgeschlossenen Raum 2, wie in Fig. 1 durch Pfeile angedeutet ist. Aufgrund der geeigneten Energiewahl wird eine Ionisation der Luftbestandteile durch Einwirken der optischen Strahlung S vermieden, was ansonsten ein Abtrennen der ionisierten Schadstoffmoleküle aus der zu reinigenden Luft nicht möglich machen würde. Mit anderen Worten, aufgrund der selektiven Auswahl der zur Anregung der Elektronen ausgewählten Energie werden nur die Schadstoffinoleküle ionisiert und abtransportiert. D.h., die Entstehung unerwünschter Neben- bzw. Reaktionsprodukte infolge von Fragmentation oder Radikalbildung wird vermieden, da im Gegensatz zu den aus dem Stand der Technik bekannten Ionisationsverfahren, wie beispielsweise bei der Plasma-Ionisation, hierbei eine sogenannte "weiche" Ionisation durchgeführt wird.

Im Folgenden wird anhand von Fig. 3 der prinzipielle physikalische Prozess, der während der Bestrahlung der zu reinigenden Luft mit optischer Strahlung abläuft, beschrieben. Fig. 3 zeigt ein Termschema eines zu ionisierenden Moleküls. Es sind drei verschiedene energetische Zustände dargestellt, der Grundzustand GZ, ein Zwischenzustand ZZ sowie die Ionisationsgrenze IG. Aufgrund der Einwirkung der optischen Strahlung werden Elektronen aus dem Atomverband der Schadstoffmoleküle befreit, d.h. Elektronen werden über die Ionisationsgrenze angehoben. Ist die Photonenenergie der einwirkenden optischen Strahlung dabei größer als der energetische Abstand zwischen Ionisationsgrenze und Grundzustand, erfolgt die Auslösung des Elektrons in einem einzigen Schritt, und es bleibt ein positiv geladenes Molekül zurück. Der durch die Einstrahlung von Lichtquanten angeregte Ionisationsprozess führt also in einem einstufigen Prozess zur direkten Ionisation des Moleküles.

Da die für diesen Prozess erforderliche Wellenlänge relativ klein ist, ist es in der Regel vorteilhaft, den ionisierten Zustand über eine Zwei- bzw. Mehrstufenanregung zu erzeugen. Bei dieser alternativen Form der Photoionisation wird durch die Einwirkung der Photonen zunächst das Molekül in einen intermediären Zustand angeregt. Dieser Prozess ist in Fig. 3 schematisch durch die Pfeile P angedeutet. Die Energie der eingestrahlten Photonen entspricht dabei der Energiedifferenz ΔE zwischen intermediärem Zustand und Grundzustand. Es handelt sich folglich bei der Anhebung des Elektrons in den Zwischenzustand um eine resonante Photonenanregung. Das Elektron im Zwischenzustand kann dann durch einen weiteren Anregungsprozeß über die Ionisationsgrenze gehoben werden, so dass das Elektron herausgeschlagen wird und ein positiv geladenes Molekül zurückbleibt. Dieser Prozess kann auch über mehrere Zwischenschritte erfolgen.

Um ausreichend hohe Leistungsdichten zur Durchführung einer derartigen Multiphotonenanregung zu erreichen, werden vorzugsweise Laser verwendet. Derartige Laser können UV-Laser oder andere geeignete Laser sein. Die verwendeten Laser können bei diskreten Wellenlängen alternierend oder simultan emittieren oder auch durchstimmbar sein, und emittieren pulsförmige Strahlung bei hohen Repetitionsraten, wodurch sich sehr hohe Ionisationsausbeuten bis zu 100% erreichen lassen und eine quantitative Beseitigung der Schadstoffe aus der Luft möglich ist. Die Repetitionsrate liegt typischerweise im Bereich von einigen kHz. Wenn Ultrakurzpulslaser, beispielsweise ps-Laser, verwendet werden, liegt die Repetitionsrate typischerweise im Bereich von etwa 100 MHz.

Des weiteren kann eine gleichzeitige Ionisation verschiedener Schadstoffinoleküle durch eine geeignete Wahl der Bandbreite der auf die zu reinigende Luft einwirkenden optischen Strahlung erzielt werden. Eine Bandbreite von typisch 10nm erscheint hierfür geeignet. Alternativ können zwei oder mehrere Strahlungsquellen verwendet werden, die optische Strahlung mit verschiedenen Wellenlängen und ggf. Bandbreiten emittieren.

Abschließend ist anzumerken, dass neben Lasern auch UV-Lampen als Strahlungsquellen verwendet werden können. In diesem Fall reicht die Leistungsdichte im allgemeinen jedoch nicht für eine Mehrfachanregung aus, so dass bei einer Verwendung von UV-Lampen lediglich eine Photoionisation über einen einstufigen Prozess möglich ist.

Die beschriebene Erfindung kann in einer umluftbetriebenen, einer Frischluft zuführenden Klimaanlage oder anderen Luftzirkulationssystemen eingesetzt werden, ist aber nicht auf diese Anwendungsgebiete beschränkt. Die Erfindung ermöglicht weitgehend unabhängig von Temperatur und Luftfeuchtigkeit eine hohe Reinigungswirkung im Immissionskonzentrationsbereich bei energiesparendem, kontinuierlichem Betrieb ohne Filterwechsel. Aufgrund des Verzichts auf einen Filterwechsel oder auf eine separate Degradation der Absorberfilter wird die Wartung minimiert. Ferner wird infolge großer Absaugquerschnitte ein sehr geringer Druckabfall hervorgerufen, was sich günstig im Hinblick auf eine kontinuierliche und energiesparende Luftreinigung auswirkt.

## Patentansprüche

1. Verfahren zum selektiven Entfernen von gasförmigen Schadstoffen aus der Raumluft, insbesondere in Fahrzeug-Personenkabinen und Flugzeugkabinen,
**gekennzeichnet durch die Schritte:**
- Einleiten der zu reinigenden Luft in einen Reinigungsraum (6a);
- Bestrahlen der zu reinigenden Luft mit optischer Strahlung (S), so dass die in der zu reinigenden Luft enthaltenen Schadstoffe (3a) **durch** Einfach- und/oder Mehrfachphotonenanregung ionisiert werden;
- Absaugen der ionisierten Schadstoffe **durch** Anlegen eines elektrischen Feldes (E), um die Schadstoffe aus der zu reinigenden Luft zu entfernen.

2. Verfahren nach Anspruch 1, **dadurch gekennzeichnet, dass** die Einfach- und/oder Mehrfachphotonenanregung resonat oder nichtresonant erfolgt.

3. Verfahren nach Anspruch 1, **dadurch gekennzeichnet, dass** die Energie der optischen Strahlung (S) kleiner ist als die Energiedifferenz (ΔE) zwischen Grundzustand (GZ) und Ionisationsgrenze (IG) der Luftbestandteile, wobei die Energie ausreicht, um die sich in der zu reinigenden Luft befindenden Schadstoffe (3a) zu ionisieren.

4. Verfahren nach Anspruch 1, **dadurch gekennzeichnet, dass** die Energie der optischen Strahlung (S) kleiner als die Ionisationsenergie von Sauerstoff ist.

5. Verfahren nach Anspruch 1, **dadurch gekennzeichnet, dass** die Energie der optischen Strahlung (S) kleiner als 12.5 eV ist.

6. Verfahren nach Anspruch 1, **dadurch gekennzeichnet, dass** die Wellenlänge der optischen Strahlung (S) zeitlich durchstimmbar ist, so dass verschiedene Schadstoffe nacheinander ionisiert werden.

7. Verfahren nach Anspruch 6, **dadurch gekennzeichnet, dass** die Wellenlänge der optischen Strahlung (S) zeitlich zwischen 200 nm und 330nm variiert.

8. Verfahren nach Anspruch 1, **dadurch gekennzeichnet, dass** optische Strahlung (S) unterschiedlicher Wellenlänge gleichzeitig auf die zu reinigende Luft einwirkt, so dass verschiedene Schadstoffe gleichzeitig ionisiert werden, wobei die Wellenlängen im Bereich von 200 nm bis 330 nm liegen.

9. Verfahren nach Anspruch 1, **dadurch gekennzeichnet, dass** bei einer mehr als zweistufigen Photonenanregung die optische Strahlung (S) auch Wellenlängen im sichtbaren oder infraroten Bereich umfasst, wobei die Wellenlängen im Bereich von 331 nm bis 1 mm liegt.

10. Verfahren nach Anspruch 1, **dadurch gekennzeichnet, dass** bei einer mehr als zweistufigen Photonenanregung optische Strahlung, Mikrowellenstrahlung und/oder elektrische Feldenergie zugeführt wird.

11. Verfahren nach Anspruch 1, **dadurch gekennzeichnet, dass** die optische Strahlung (S) gepulst auf die zu reinigende Luft einwirkt, wobei die Repetitionsrate zwischen 1Hz und 200 GHz und die Pulslängen zwischen einer ms und 10 fs liegen.

12. Vorrichtung zum selektiven Entfernen von gasförmigen Schadstoffen aus der Raumluft, insbesondere in Kraftfahrzeug-Personenkabinen und Flugzeugkabinen,
**gekennzeichnet durch:**
- einen Reinigungsraum (6a), in dem sich die zu reinigende Luft befindet;
- mindestens eine Strahlungsquelle (10), die optische Strahlung (S) emittiert und auf die zu reinigende Luft einstrahlt, so dass die in der zu reinigenden Luft enthaltenen Schadstoffe (3a) **durch** Einfach- und/oder Mehrfachphotonenanregung ionisiert werden;
- eine Elektrodenanordnung (12, 13) zum Erzeugen eines elektrischen Feldes (E), wodurch die ionisierten Schadstoffe abgesaugt und aus der zu reinigenden Luft entfernt werden.

13. Vorrichtung nach Anspruch 12, **dadurch gekennzeichnet, dass** die Einfachund/oder Mehrfachphotonenanregung resonant oder nichtresonant erfolgt.

14. Vorrichtung nach Anspruch 12 **dadurch gekennzeichnet, dass** der Reinigungsraum (6a) eine Einlassöffnung (7) zum Einströmen der zu reinigenden Luft und zwei Auslassöffnungen (8, 9) aufweist, wobei die eine Auslassöffnung (8) zum Abführen der ionisierten Schadstoffe und die andere Auslassöffnung (9) zum Weiterleiten der gereinigten Luft dient.

15. Vorrichtung nach Anspruch 12 **dadurch gekennzeichnet, dass** der Reinigungsraum (6a) ein Fenster (11) aufweist, durch das die von der mindestens einen Strahlungsquelle (10) emittierte optische Strahlung (S) auf die zu reinigende Luft eingestrahlt wird.

16. Vorrichtung nach Anspruch 12, **dadurch gekennzeichnet, dass** mindestens eine Strahlungsquelle (10) durchstimmbar ist und kontinuierlich oder gepulst optische Strahlung (S) emittiert.

17. Vorrichtung nach Anspruch 12, **dadurch gekennzeichnet, dass** zwei oder mehrere Strahlungsquellen (10) verwendet werden, die optische Strahlung (S) unterschiedlicher Wellenlänge emittieren, so dass gleichzeitig verschiedene Schadstoffe ionisiert werden.

18. Verwendung der Vorrichtung nach einem der Ansprüche 12 bis 17 in einer Klimaanlage oder anderen Luftzirkulationssystemen.
